# EUROPEAN PATENT SPECIFICATION

(11) **EP 2 295 300 B1**
(45) Date of publication and mention of the grant of the patent: **06.11.2019**
(21) Application number: 09170328.0
(22) Date of filing: 15.09.2009
(51) Int. Cl.: B60W 30/18

(54) **System and method for reducing energy consumption of a vehicle**
System und Verfahren zur Verringerung des Energieverbrauchs eines Fahrzeugs
Système et procédé pour réduire la consommation d'énergie d'un véhicule

(43) Date of publication of application: 16.03.2011
(73) Proprietor: Volvo Car Corporation, 405 31 Göteborg (SE)
(72) Inventor: Ritare, Kristoffer, 41653 Göteborg (SE); Persson, Thomas, 41143 Göteborg (SE)
(74) Representative: Valea AB

(56) References cited:
- WO-A1-2006/039520
- DE-A1- 10 134 997
- DE-A1- 19 941 705
- US-A1- 2007 112 476

## Description

### TECHNICAL FIELD

The invention relates to a system for reducing the energy consumption of a vehicle, as well as to a method for reducing the energy consumption of a vehicle and a method for adjusting a setting, which controls a function in the vehicle.

### BACKGROUND OF THE INVENTION

Today modern vehicles are equipped with more or less advanced control systems. These may be used to control numerous functions of the vehicle apart from the very functions needed for driving the vehicle. A number of these functions potentially effect the energy consumption of the vehicle in operation. There is today a desire to reduce the energy consumption of vehicles, in order to reduce the environmental impact and/ or improve driving economy. At the same time, most vehicle users want to have high comfort when using the vehicle. These desires are at least partly contradictory, since comfort systems such as AC, are rather energy-demanding.

It is known from the background section of the document US 2007/0186573 A1, by Ziehr et al, that the HVAC, heating, ventilation and air conditioning control, may be equipped with an "ECO button" by which a user chooses either maximum comfort or maximum fuel economy. However, with this solution, there is no possibility for the user to make his/ her own personal settings in order to influence which functions are activated or deactivated by the "ECO button".

Patent document US 2007/0112476 A1 relates, according to the abstract, to a control and management system for automobiles, a central processor in the system connects traditionally unrelated vehicle subsystems together to realize synergistic functions such as smart driving, automatic parking, etc. Furthermore, according to the abstract, a master interface having a display is employed in the system to help a user control and manage the vehicle functions.

Naturally, without any "ECO button" or the like, the user may manually adjust the functions of the different systems. However, he/ she then has to go through many functions to make all of his/ her preferred settings, which is laborious and takes some time. There would also be a risk, if the user of the control system is driving the vehicle, that he/ she would lose focus of driving since some attention is drawn to the control system instead of to the traffic. In reality, probably most users would only adjust the most important functions and skip adjusting the rest.

### SUMMARY OF THE INVENTION

The object of the present invention is to overcome or ameliorate at least one of the disadvantages of the prior art, or to provide a useful alternative.

It is desirable to provide a system for reducing the energy consumption of a vehicle, which system is able to apply the user's own preferred personal settings.

It is further desirable to provide a system allowing easy activation of the user-preferred settings.

It is moreover desirable to provide a system being able to influence the user to use the vehicle in a less energy-consuming way.

The object above may be achieved by a system according to claim 1 and a method according to claim 11.

According to the invention, there is provided a system for reducing the energy consumption of a vehicle according to claim 1. The system comprises a memory for storing a set of user-preferred settings being adjustable by a user and a switch. The user-preferred settings control a plurality of functions in the vehicle, whereof at least one function is energy-demanding. Each of the user-preferred settings controls at least one of the functions. The set of user-preferred settings is applicable by means of the switch.

The system enables the selection of a user-preferred setting, which is able to reduce the energy consumption of the vehicle.

The use of a switch for applying the settings of all functions in the set makes it quick and easy for the user to apply his/ her personal settings, especially if one switch is used to activate many user-preferred settings at a time. Since the settings are adjustable by the user, each user has the possibility to choose his/her preferred settings. Since at least one function is energy-demanding, the choice of personal settings gives an opportunity to reduce energy consumption. The user is free to make his/ her own compromise between energy consumption and comfort. Preferably, the set of user-preferred settings, when applied, may be able to reduce the total energy consumption of the vehicle by at least 1%, preferably at least 3% and most preferably at least 10% in relation to when the set of settings is not applied. It may even be able to reduce the total energy consumption of the vehicle by at least 20%.

Each setting may control one, two or more functions. It may also be possible for the user to choose a setting as his/ her user-preferred setting, which setting controls a combination of functions optimized at specific levels in order to e.g. reduce energy consumption. Such a combination of optimized levels may be provided by the vehicle manufacturer at delivery of the vehicle.

At least one of the functions of the plurality of functions is energy-demanding. In many cases, some of the functions or the majority of the plurality of functions are energy-demanding, and in some cases essentially all of the functions of the plurality of functions are energy-demanding. By a function being energy-demanding is meant that it has more than a negligible influence on the energy consumption. Examples of energy-demanding functions are given below. The energy-demanding functions are often continuously or intermittently in use when the vehicle is in operation. Other functions may only be used once, e.g. setting a specific user's preferred positions of the seat and mirrors. The setting of the seat and mirror only needs a little energy and is normally only done once; they are thus example of functions having a negligible influence on the total energy consumption, and are consequently not energy-demanding functions. Nevertheless, it may be practical to include them in the set of user-preferred settings.

The vehicle being in operation comprises that the vehicle is being driven. The vehicle may be running, but it is also included when for example the vehicle is standing still in front of a red traffic light or in a still-standing traffic jam.

Since some of the functions are not in use all the time when the vehicle is in operation, the influence of the settings on the energy consumption may vary from moment to moment. However, by saying that the total energy consumption is reduced, it is meant that the total energy is reduced taken as an average over time, when these settings are applied and the vehicle is in operation. The time period could for example be short, like a minute or so, or long, like during the time of the last drive or over the whole time the particular set of settings has been applied and the vehicle has been in operation.

The plurality of functions may comprise functions which are primarily comfort related. At least one function may be primarily comfort related, or a majority of the functions may be primarily comfort related or even essentially all of the functions. The term primarily comfort-related functions means functions, which are not necessary for operation of the vehicle, but potentially influence the comfort of the persons in the vehicle. With other words, the vehicle will run whether or not the primarily comfort related functions are activated. The intention is to omit functions which may effect the operation of the vehicle or the security, since including such functions could for example lead to an unplanned stop of the vehicle or an increased risk of accidents.

The plurality of functions may comprise functions related to a start-stop system, engine settings, transmission settings, a climate control system, a cruise control system and/or an infotainment system. Many of these functions are known to be energy-demanding.

Climate functions are known to be mainly comfort related, and yet some of them may be rather energy-demanding. Different users often have different preferences about how to adjust the climate functions, and these functions are thus appropriate to include in the set of user-preferred settings. A typical example is AC, air conditioning.

At least one function of the plurality of functions may have dual modes: activated or deactivated, e.g. a defroster being on or off. Other functions may be adjusted to a certain value or level, e.g. fan speed. The way the function is adjusted should preferably be adapted in an appropriate way according to which function it is.

In an embodiment the memory is adapted to store two or more sets of settings. The system further comprises selection means to select which one of the two or more sets should be applied by the switch. This is useful if more than one user is using the vehicle. It may also be useful to adapt the user-preferred settings to for example season and/or climate zone.

The set of user-preferred settings may be accessed by means of a PIN code. Thereby, it may be secured that only the correct user can change the settings of his/ her set. It may also prevent unintentional changes of the settings. A PIN code may also be needed to apply the set of user-preferred settings.

An initial set of settings may comprise at least one predetermined initial setting, which may be adjusted by the user to provide the set of user-preferred settings. The vehicle can be provided with the predetermined initial setting at delivery, making sure that something happens when the above-mentioned switch is activated.

The system may further comprise presentation means and input means. The presentation means is adapted to present at least one function of the plurality of functions. The input means is adapted to allow the user of the system to adjust the setting of the presented at least one function, which setting is stored in the memory as one setting of the set of user-preferred settings. This provides the user with an opportunity to make his/ her choice of settings. The presentation means may comprise a display. The input means may comprise a select button. It would also be possible to make the user-preferred settings in an external system, e.g. a computer, and transfer the whole set to the control system of the vehicle.

The settings of the set of user-preferred settings may be grouped in a hierarchical structure with a main level comprising elements representing subsets of settings and a least one sublevel comprising at least one of the subsets. A hierarchical structure gives the user an overview over which settings are possible to adjust.

At least one of the subsets may comprise a subset of settings controlling climate functions. Climate functions are known to be mainly comfort related, and yet some of them may be rather energy-demanding. Different users often have different preferences about how to adjust the climate functions, and they are thus appropriate to include as a subset in the set of user-preferred settings.

The system may further be provided with means presenting the energy saved by applying the set of user-preferred settings, for example compared to if the set of settings is not applied. This will help guiding the user when making his/ her choices. He/ she can then directly see how much energy is possible to save and have a chance to judge if a certain comfort sacrifice is worthwhile or not. The information may also help to motivate the user to run the vehicle more energy-efficiently. Comparison may be made with predicted vales for future energy consumption. Such predictions may be general or may consider parameters influencing future energy consumption like ambient temperature, precipitation, cloudiness etc. Comparison may also be made based on historical data. Thereby the user can get feedback about how much energy was saved by applying the user-preferred settings. Historical data may also be used for modeling which saving would have been possible, if a certain setting would have been applied.

The system may further provide direct access to at least one function of the plurality of functions. The direct access is able to override the setting of the function according to the set of user-preferred settings. This means that the user may apply a certain function, when it is really needed. Such applications may be made temporarily without influencing the adjustment made in the set of user-preferred settings.

According to the invention, there is provided a method of reducing the energy consumption of a vehicle according to claim 11. The method comprises the step of activating/ deactivating a switch, wherein
activating of the switch applies a set of user-preferred settings being adjustable by a user, the user-preferred settings control a plurality of functions in the vehicle, whereof at least one function is energy-demanding, and
each of the user-preferred settings controls at least one of the plurality of functions.

This method makes it quick and easy for the user to apply his/ her personal settings, especially if one switch is used to activate many user-preferred settings at a time. Since the settings are adjustable by the user, each user has the possibility to choose his/her preferred settings. Since at least one function is energy-demanding, the choice of personal settings gives an opportunity to reduce energy consumption. The user is therefore free to make his/ her own compromise between energy consumption and comfort. Preferably, the set of user-preferred settings, when applied, is able to reduce the total energy consumption of the vehicle by at least 1%, preferably at least 3% and most preferably at least 10% in relation to when the set of settings is not applied.

The method may further comprise the step of overriding a setting of a function in the set by direct operation of the function. This means that the user may apply a certain function, when it is really needed. Such applications may be made temporarily without influencing the selection made in the set of user-preferred settings.

In the disclosure there is provided a method of adjusting a setting of a set of user-preferred settings being adjustable by a user, wherein
each of the user-preferred settings controls at least one function of a plurality of functions, whereof at least one function is energy-demanding,
the set of user-preferred settings are applicable by means of a switch,
The method comprises the steps:
- presenting the at least one function to the user,
- prompting the user to adjust the presented at least one function according to the user's preference, and
- storing the adjusted setting.

The set of user-preferred settings comprises the user's preferred settings. The plurality of functions can be controlled according to the settings of the set, when that set is applied by activating the above-mentioned switch. At least one function is energy-demanding. Preferably, the set of user-preferred settings, when applied, is able to reduce the total energy consumption of the vehicle by at least 1%, preferably at least 3% and most preferably at least 10% in relation to when the set of settings is not applied.

The method may further include that an initial set of settings comprises at least one predetermined initial setting, which may be adjusted by the user to provide the set of user-preferred settings.The predetermined initial setting may be provided in the vehicle at delivery.

### BRIEF DESCRIPTION OF THE DRAWINGS

The present invention will hereinafter be further explained by means of non-limiting examples with reference to the appended figures wherein:
- Figure 1: is a schematic view of a control panel in a vehicle according to a first embodiment of the invention;
- Figure 2: illustrates presentation means displaying a main level of a set of settings;
- Figure 3: illustrates a sublevel of the main level illustrated in Figure 2.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims. Details from two or more of the embodiments may be combined with each other. The text of the application uses the word vehicle, which comprises cars, buses, lorries, trucks, construction equipment etc.

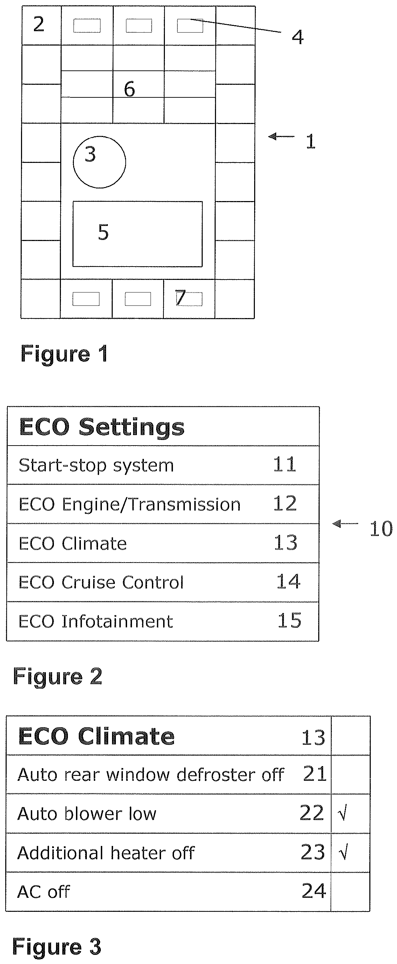

Figure 1 illustrates a control panel 1 of a vehicle control system. The control panel 1 may be located in the centre stack or on the front panel of the vehicle. The control panel comprises a plurality of buttons 2 and one or more turnable knobs 3 controlling different functions of the vehicle. The buttons may be dual-mode buttons having two states: activated or deactivated. The buttons may control functions such as radio, navigation system, AC, defroster, seat heating etc. A button may have a light diode 4 showing if it is active or not, indicated by the light diode 4 being turned on or off. The turnable knob 3 may be used to for example select the speed of a fan. It would also be possible to use slide controls (not illustrated). The control panel 1 may be able to display further information by means of presentation means, e.g. a display 5, which for example is useful when using the radio or navigation system. A group of buttons 6 may be used to give input to systems such as radio or navigation.

In the illustrated embodiment, one of the dual-mode buttons is a switch 7 for application of user-preferred settings. When this switch is activated, a set of user-preferred settings is retrieved from a memory of the control system and applied for controlling the vehicle functions controlled by the set. Each of the settings controls at least one of the functions. The user only has to activate one switch 7 in order to apply all the settings of the functions of the set according to the user's preferences. Thereby it is quick and easy to implement the user's preferred settings. If the user instead would have to adjust each function individually as in a conventional vehicle system, it would be laborious and take time. There would also be a risk, if the user of the control system is driving the vehicle, that he/ she would lose focus of driving since some attention is drawn to the control system instead of to the traffic. In reality, probably most users would in that situation only adjust the settings of the most important functions and skip adjusting the rest.

The vehicle functions controlled by the set may comprise functions related to start-stop system, engine settings, transmission settings, climate control system, cruise control system and/or infotainment system. These are mainly functions, which are not necessary for operation of the vehicle. Instead they may for example be primarily comfort related. With other words, the vehicle will run whether or not these functions are activated, but they may influence the comfort of the persons in the vehicle. A typical example is AC, air conditioning. More functions will be mentioned below in relation to Figures 2 and 3. The vehicle will be operable, no matter if the AC is on or not. However, it is also well known that the AC is rather energy-demanding. Turning off the AC will reduce the energy consumption of the vehicle, while potentially reducing the comfort of the person in the vehicle.

Other functions also controlled by the set of user-preferred settings may be more or less energy-demanding. The system may be provided with a presentation means, e.g. a display, which is able to indicate how much energy is saved for example compared to if the set of user-preferred settings is not applied. This could help the user to operate the vehicle in a more energy-efficient way. It could also guide him/ her to which comfort sacrifices are most rewarded by less energy consumption, so that he/ she does not sacrifice comfort for an insignificant reduction of energy consumption. The system may be especially useful in a vehicle with a limited driving distance, for example a vehicle powered by battery. Less energy consumption can in that case be translated into an extended possible driving distance. Less energy consumption is good both for the economy of the vehicle as well as for the environment. For a vehicle powered by fuel, such as petrol, gas or ethanol, less energy consumption will mean less fuel consumption and thereby reduce the emission of CO₂, carbon dioxide, per driven kilometre. Some users of the system may be motivated to give up some comfort, if they know that it is good for the environment and/ or driving economy.

A large part of the functions controlled by the set of user-preferred settings relate to functions that may have an effect on the energy consumption during running of the vehicle, but it may also be possible to include functions, which are only activated at the start of driving, like a specific user's preferred positions of the seat and mirrors. Although such functions would only have an energy effect at start, which effect even may be negligible, it may never the less be practical to include them in the set of user-preferred settings.

The settings of the set of user-preferred settings may be organised in a hierarchical structure, where settings controlling similar functions are grouped into subsets. Examples of different subsets are shown in Figure 2 illustrating a display image showing a main level list 10. The main level list comprises elements representing subsets of settings. A first subset 11 comprises settings controlling functions related to the start-stop system, a second subset 12 comprises settings controlling functions related to the engine and transmission, a third subset 13 comprises settings controlling functions related to the climate system, a fourth subset 14 comprises settings controlling functions related to the cruise control system and a fifth subset 15 comprises settings controlling functions related to the infotainment system. Of course, more than five subsets may be used. The list 10 may be scrollable. In the example of Figure 2, a large part of the settings are related to possible energy savings, so they have been given the headline "ECO settings". ECO may in this context be interpreted as economy and/or ecology. In this example, the switch 7 in Figure 1, which is activated in order to apply the set of user-preferred settings, may suitably be labelled "ECO".

Figure 3 illustrates a list of settings belonging to the subset "ECO Climate" settings 13. In the illustrated case the user has activated "Auto blower low" 22 and "Additional heater off" 23, i.e. the blower motor speed is running at low speed and the additional heater is turned off. Further, "Auto rear window defroster off" 21 and "AC off" 24 are not activated, i.e. the auto rear window defroster and the AC are running as normal. The "ECO climate" subset may comprise more settings. The list may be scrollable. The settings may suitably be placed in order with the most energy influencing first. Alternatively, related settings may be grouped together. If appropriate, further sublevels organised hierarchically below the shown sublevel may be used.

In the example of Figure 3, the functions are either activated or deactivated. It would also be possible to adjust a function to a certain level. As an example, the auto blower could be adjusted to a number between 0% and 100% of full fan speed. It would further be possible (not illustrated) to have a setting, which controls a combination of functions optimized to e.g. reduce energy consumption. Such a combination may be provided by the vehicle manufacturer at delivery of the vehicle. Purely as an example, in the "ECO climate" subset there could be a setting called "ECO climate auto mode". Selection of "ECO climate auto mode" would mean still using AC and additional heater but much more seldom than in normal mode.

If the vehicle is used by different users, for example a family car or a company vehicle, each user may have his/ her own set of user-preferred settings. A certain set could be applied by having more than one switch in the control panel, preferably one for each user. In an alternative solution, the system may prompt the user which set of user-preferred setting he/ she wants to use. A PIN code may be required in order to apply the set of user-preferred settings. The vehicle may be provided with a predetermined initial set of settings at delivery of the vehicle, in order to make sure that something happens when the switch 7 is activated. It may also be provided with more than one predetermined initial set, e.g. for summer and for winter and/or for different climate zones.

The system may be provided with controls giving direct access to one or more of the functions, which are controlled by a setting comprised in the above-mentioned set of user-preferred settings. The controls may be dual-mode buttons 2 of the control panel 1. Thereby the setting of a certain function according to the set of user-preferred settings may be overridden. For example, if the user realizes that he cannot see through the rear window, he may activate the rear window defroster, although he has selected the setting "Auto rear window defroster off" in the set. This will result in that the rear window defroster is activated when the user really needs it. When the user does not want to use the rear window defroster any more, he/ she can deactivate its control again and the system will return to the setting made in the set of user-preferred settings.

As mentioned above, the vehicle may be provided with a predetermined initial set of settings at delivery, but the system is designed to give the user the possibility having his/ her own personally preferred settings. The user therefore can make his/ her own settings. Purely as an example, this can be done as explained below.

First, the system is brought to a set-up mode, in which the user is permitted to make changes of the settings. This may for example be done by pressing the switch 7 for a certain time period, which is longer than normal activation of the switch. There may also be a separate "set-up" button activating the set-up mode. In the set-up mode, the user can move in the lists of the main level, see example in Figure 2. Movement may be done with "up" and "down" buttons and letting the system mark the current line in the list. When the right subset is marked, the user can select that subset by means of e.g. a "select" button. Of course, the list may comprise more elements than can be seen on the display 5. The list 10 may then be scrollable. When a subset has been selected, the system instead displays the list of the subset, see example in Figure 3. The user can then move in that list. When a certain setting is selected, it is made active, which can be seen as a "√" in Figure 3. Selecting it once again deactivates it, and the "√" disappears. Different methods of moving in a list, scrolling a list and selecting elements are well-known from many applications in various technical fields and will not be further explained herein. The system may help the user by providing help texts explaining what a certain selection means. For example "Auto blower low" is explained by "decrease speed of blower".

As also mentioned above, the system may be able to indicate how much energy is saved for example compared to if all the settings of the set are not applied. The user can then test settings of different functions and see how much energy a certain setting would give, as well as how much energy is totally saved with the user's whole set of settings. The user is thereby helped to make intelligent choices.

The system may store the settings as soon as they are made, or it may have a "save" button. In an embodiment, the settings, which have not been adjusted by the user, have a predetermined initial setting. A PIN code may be required in order to adjust settings in the set of user-preferred settings.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A system for reducing the energy consumption of a vehicle,
said system comprising a memory for storing a set of user-preferred settings being adjustable by a user and a switch, wherein
said user-preferred settings are configured to control a plurality of functions in the vehicle, whereof at least one function is energy-demanding, each of said user-preferred settings is configured to controls at least one of said plurality of functions, wherein
said plurality of functions comprises functions related to a climate control system, said system being configured such that when said switch is activated, said set of user-preferred settings is retrieved from said memory of the control system and applied for controlling said vehicle functions controlled by said set,
**characterized in that**
said system is configured such that when said switch is not activated, the vehicle functions are controlled without applying said set of user-preferred settings,
said system being provided with means adapted to present the energy saved by applying said set of user-preferred settings, compared to if said set of user-preferred settings is not applied, when controlling the vehicle functions.

2. The system according to claim 1, wherein one switch is used to activate many of said user-preferred settings at a time, preferably one switch is used to activate all of said user-preferred settings.

3. The system according to claim 1 or 2, wherein said plurality of functions comprises functions which are primarily comfort related.

4. The system according to any one of the preceding claims, wherein said plurality of functions comprises functions related to a start-stop system, engine settings, transmission settings, a cruise control system and/or an infotainment system.

5. The system according to any one of the preceding claims, wherein said memory is adapted to store two or more sets of settings, and wherein the system further comprises selection means to select which one of said two or more sets should be applied by said switch.

6. The system according to any one of the preceding claims, wherein an initial set of settings comprises at least one predetermined initial setting, which may be adjusted by said user to provide said set of user-preferred settings.

7. The system according to any one of the preceding claims, wherein said system further comprises presentation means and input means, said presentation means being adapted to present at least one function of said plurality of functions, and said input means being adapted to allow said user of the system to adjust the setting of the presented at least one function, which setting is stored in said memory as one setting of said set of user-preferred settings.

8. The system according to any one of the preceding claims, wherein the settings of said set of user-preferred settings are grouped in a hierarchical structure with a main level comprising elements representing subsets of settings and a least one sublevel comprising at least one of said subsets.

9. The system according to claim 8, wherein at least one of said subsets comprises a subset of settings controlling climate functions.

10. The system according to any one of the preceding claims, wherein the system further provides direct access to at least one function of said plurality of functions, said direct access being able to override the setting of said function according to said set of user-preferred settings.

11. A method of reducing the energy consumption of a vehicle, the method comprising the step of activating/deactivating a switch, wherein
in case of activating of said switch applies a set of user-preferred settings being adjustable by a user,
said user-preferred settings control a plurality of functions in the vehicle, whereof at least one function is energy-demanding, and
each of said user-preferred settings controls at least one of said plurality of functions,
in case of deactivating of said switch, controlling said vehicle without said set of user-preferred settings
and presenting the energy saved by applying said set of user-preferred settings, compared to if said set of user-preferred settings is not applied.

12. The method according to claim 11, wherein the method further comprises the step of overriding a setting of a function in said set by direct operation of said function.

## Patentansprüche

1. System zum Reduzieren des Energieverbrauchs eines Fahrzeugs,
wobei das System einen Speicher zum Speichern eines Satzes von benutzerbevorzugten Einstellungen, die von einem Benutzer anpassbar sind, sowie einen Schalter umfasst, wobei
die benutzerbevorzugten Einstellungen dazu ausgelegt sind, eine Vielzahl von Funktionen im Fahrzeug zu steuern, wovon mindestens eine Funktion energieaufwendig ist,
jede der benutzerbevorzugten Einstellungen dazu ausgelegt ist, mindestens eine der Vielzahl von Funktionen zu steuern, wobei
die Vielzahl von Funktionen Funktionen umfassen, die ein Klimaregelsystem betreffen, wobei das System derart ausgelegt ist, dass, wenn der Schalter aktiviert wird, der Satz von benutzerbevorzugten Einstellungen aus dem Speicher des Steuersystems abgerufen wird und zum Steuern der Fahrzeugfunktionen, die von dem Satz gesteuert werden, angewendet wird,
**dadurch gekennzeichnet, dass**
das System derart ausgelegt ist, dass, wenn der Schalter nicht aktiviert ist, die Fahrzeugfunktionen ohne Anwenden des Satzes von benutzerbevorzugten Einstellungen gesteuert werden,
wobei das System mit Mitteln versehen ist, die angepasst sind, die durch Anwenden des Satzes von benutzerbevorzugten Einstellungen gesparte Energie zu präsentieren, verglichen damit, wenn der Satz von benutzerbevorzugten Einstellungen nicht angewendet wird, wenn die Fahrzeugfunktionen gesteuert werden.

2. System nach Anspruch 1, wobei ein Schalter verwendet wird, um viele der benutzerbevorzugten Einstellungen auf einmal zu aktivieren, vorzugsweise ein Schalter verwendet wird, um alle benutzerbevorzugten Einstellungen zu aktivieren.

3. System nach Anspruch 1 oder 2, wobei die Vielzahl von Funktionen Funktionen umfasst, die primär den Komfort betreffen.

4. System nach einem der vorhergehenden Ansprüche, wobei die Vielzahl von Funktionen Funktionen umfassen, die ein Start-Stopp-System, Motoreinstellungen, Getriebeeinstellungen, ein Geschwindigkeitsregelsystem und/oder ein Infotainmentsystem betreffen.

5. System nach einem der vorhergehenden Ansprüche, wobei der Speicher angepasst ist, zwei oder mehr Sätze von Einstellungen zu speichern, und wobei das System ferner Auswahlmittel zum Auswählen, welcher der zwei oder mehr Sätze vom Schalter angewendet werden soll, umfasst.

6. System nach einem der vorhergehenden Ansprüche, wobei ein anfänglicher Satz von Einstellungen mindestens eine vorbestimmte anfängliche Einstellung umfasst, die vom Benutzer angepasst werden kann, um den Satz von benutzerbevorzugten Einstellungen bereitzustellen.

7. System nach einem der vorhergehenden Ansprüche, wobei das System ferner Präsentationsmittel und Eingabemittel umfasst, wobei die Präsentationsmittel angepasst sind, mindestens eine Funktion der Vielzahl von Funktionen zu präsentieren, und die Eingabemittel angepasst sind, es dem Benutzer des Systems zu erlauben, die Einstellung der präsentierten mindestens einen Funktion anzupassen, wobei die Einstellung als eine Einstellung des Satzes von benutzerbevorzugten Einstellungen im Speicher gespeichert wird.

8. System nach einem der vorhergehenden Ansprüche, wobei die Einstellungen des Satzes von benutzerbevorzugten Einstellungen in einer hierarchischen Struktur mit einer Hauptebene, die Elemente umfasst, die Untersätze von Einstellungen repräsentieren, und mindestens einer Unterebene, die mindestens einen der Untersätze repräsentiert, gruppiert sind.

9. System nach Anspruch 8, wobei mindestens einer der Untersätze einen Untersatz von Einstellungen umfasst, die Klimafunktionen steuern.

10. System nach einem der vorhergehenden Ansprüche, wobei das System ferner direkten Zugriff auf mindestens eine Funktion der Vielzahl von Funktionen bereitstellt, wobei der direkte Zugriff die Einstellung der Funktion gemäß dem Satz von benutzerbevorzugten Einstellungen außer Kraft setzen kann.

11. Verfahren zum Reduzieren des Energieverbrauchs eines Fahrzeugs, wobei das Verfahren den Schritt des Aktivierens/Deaktivierens eines Schalters umfasst, wobei
im Fall des Aktivierens des Schalters einen Satz von benutzerbevorzugten Einstellungen angewendet wird, die von einem Benutzer anpassbar sind,
die benutzerbevorzugten Einstellungen eine Vielzahl von Funktionen im Fahrzeug steuern, wovon mindestens eine Funktion energieaufwendig ist, und
jede der benutzerbevorzugten Einstellungen mindestens eine der Vielzahl von Funktionen steuert,
im Fall des Deaktivierens des Schalters Steuern des Fahrzeugs ohne den Satz von benutzerbevorzugten Einstellungen
und Präsentieren der durch Anwenden des Satzes von benutzerbevorzugten Einstellungen gesparten Energie, verglichen damit, wenn der Satz von benutzerbevorzugten Einstellungen nicht angewendet wird.

12. Verfahren nach Anspruch 11, wobei das Verfahren ferner den Schritt des Außerkraftsetzens einer Einstellung einer Funktion in dem Satz durch direktes Betreiben der Funktion umfasst.

## Revendications

1. Système pour réduire la consommation d'énergie d'un véhicule,
ledit système comprenant une mémoire pour stocker un ensemble de réglages préférés de l'utilisateur lesquels sont ajustables par un utilisateur et un commutateur, lesdits réglages préférés de l'utilisateur étant configurés pour commander une pluralité de fonctions dans le véhicule, dont au moins une fonction est énergivore, chacun desdits réglages préférés de l'utilisateur étant configuré pour commander au moins une fonction de ladite pluralité de fonctions,
ladite pluralité de fonctions comprenant des fonctions relatives à un système de commande de climat,
ledit système étant configuré de telle sorte que lorsque ledit commutateur est activé, ledit ensemble de réglages préférés de l'utilisateur est récupéré à partir de ladite mémoire du système de commande et appliqué pour commander lesdites fonctions de véhicule commandées par ledit ensemble,
**caractérisé en ce que** ledit système est configuré de telle sorte que lorsque ledit commutateur n'est pas activé, les fonctions de véhicule sont commandées sans que soit appliqué ledit ensemble de réglages préférés de l'utilisateur,
ledit système étant pourvu de moyens conçus pour présenter l'énergie économisée grâce à l'application dudit ensemble de réglages préférés de l'utilisateur, comparée à celle si ledit ensemble de réglages préférés de l'utilisateur n'est pas appliqué, lors de la commande des fonctions de véhicule.

2. Système selon la revendication 1, dans lequel un commutateur est utilisé pour activer plusieurs desdits réglages préférés de l'utilisateur à la fois, de préférence un commutateur étant utilisé pour activer la totalité desdits réglages préférés de l'utilisateur.

3. Système selon la revendication 1 ou 2, dans lequel ladite pluralité de fonctions comprend des fonctions qui sont principalement liées au confort.

4. Système selon l'une quelconque des revendications précédentes, dans lequel ladite pluralité de fonctions comprend des fonctions liées à un système de démarrage-arrêt, des réglages de moteur, des réglages de transmission, un système de commande de croisière et/ou un système d'infodivertissement.

5. Système selon l'une quelconque des revendications précédentes, dans lequel ladite mémoire est conçue pour stocker deux ou plusieurs ensembles de réglages, et le système comprend en outre un moyen de sélection pour sélectionner celui parmi lesdits deux ou plusieurs ensembles qui devrait être appliqué par ledit commutateur.

6. Système selon l'une quelconque des revendications précédentes, dans lequel un ensemble initial de réglages comprend au moins un réglage initial prédéterminé, qui peut être ajusté par ledit utilisateur afin de fournir ledit ensemble de réglages préférés de l'utilisateur.

7. Système selon l'une quelconque des revendications précédentes, ledit système comprenant en outre un moyen de présentation et un moyen de saisie, ledit moyen de présentation étant conçu pour présenter au moins une fonction parmi ladite pluralité de fonctions, et ledit moyen de saisie étant conçu pour permettre audit utilisateur du système d'ajuster le réglage de l'au moins une fonction présentée, ce réglage étant stocké dans ladite mémoire comme étant un réglage parmi ledit ensemble de réglages préférés de l'utilisateur.

8. Système selon l'une quelconque des revendications précédentes, dans lequel les réglages dudit ensemble de réglages préférés de l'utilisateur sont groupés dans une structure hiérarchique avec un niveau principal qui comprend des éléments représentant des sous-ensembles de réglages et au moins un sous-niveau comprenant au moins un desdits sous-ensembles.

9. Système selon la revendication 8, dans lequel au moins un desdits sous-ensembles comprend un sous-ensemble de réglages commandant des fonctions de climat.

10. Système selon l'une quelconque des revendications précédentes, le système procurant en outre un accès direct à au moins une fonction de ladite pluralité de fonctions, ledit accès direct étant apte à surcommander le réglage de ladite fonction selon ledit ensemble de réglages préférés de l'utilisateur.

11. Procédé de réduction de la consommation d'énergie d'un véhicule, le procédé comprenant l'étape d'activation/de désactivation d'un commutateur, dans lequel
dans le cas de l'activation dudit commutateur, l'application d'un ensemble de réglages préférés de l'utilisateur lesquels sont ajustables par un utilisateur,
lesdits réglages préférés de l'utilisateur commandent une pluralité de fonctions dans le véhicule, dont au moins une fonction est énergivore, et
chacun desdits réglages préférés de l'utilisateur commande au moins une fonction de ladite pluralité de fonctions,
dans le cas de la désactivation dudit commutateur, la commande dudit véhicule sans ledit ensemble de réglages préférés de l'utilisateur
et la présentation de l'énergie économisée grâce à l'application dudit ensemble de réglages préférés de l'utilisateur, comparé à celle si ledit ensemble de réglages préférés de l'utilisateur n'est pas appliqué.

12. Procédé selon la revendication 11, le procédé comprenant en outre l'étape de surcommande d'un réglage d'une fonction dans ledit ensemble grâce à un actionnement direct de ladite fonction.
